# EUROPÄISCHE PATENTSCHRIFT

(11) **EP 2 322 965 B1**
(45) Veröffentlichungstag und Bekanntmachung des Hinweises auf die Patenterteilung: **17.04.2013**
(21) Anmeldenummer: 10013545.8
(22) Anmeldetag: 12.10.2010
(51) Int. Cl.: G02B 21/06

(54) **Verfahren und Vorrichtung zum Stabilisieren einer Lichtleistung eines Beleuchtungslichtstrahls und Mikroskop**
Method and device for stabilising the lighting performance of a light beam and microscope
Procédé et dispositif de stabilisation d'une puissance d'éclairage d'un rayon de lumière d'éclairage et microscope

(30) Priorität: 12.10.2009 DE 102009049050
(43) Veröffentlichungstag der Anmeldung: 18.05.2011
(73) Patentinhaber: Leica Microsystems CMS GmbH, 35578 Wetzlar (DE)
(72) Erfinder: Birk, Holger, 74909 Meckesheim (DE); Seyfried, Volker, 69226 Nußloch (DE); Warken, Florian, 69469 Weinheim (DE); Widzgowski, Bernd, 69221 Dossenheim (DE)
(74) Vertreter: Eckert, Lars

(56) Entgegenhaltungen:
- EP-A1- 1 780 572
- WO-A1-2005/031432
- DE-A1- 19 702 753
- US-A1- 2002 041 439
- US-A1- 2002 043 622

## Beschreibung

Die Erfindung betrifft ein Verfahren und eine Vorrichtung zum Stabilisieren einer Lichtleistung eines Beleuchtungslichtstrahls für ein Scanmikroskop. Dabei wird ein Beleuchtungslichtstrahl innerhalb eines Scanfeldes abgelenkt. Ferner betrifft die Erfindung ein Mikroskop, das die Vorrichtung zum Stabilisieren der Lichtleistung umfasst.

Bei einem Scanmikroskop wird ein Beleuchtungslichtstrahl über eines oder mehrere steuerbare Umlenkelemente auf ein Objekt, insbesondere eine Probe, beispielsweise eine Gewebeprobe gerichtet. Durch Bewegen der Umlenkelemente wird eine Bewegung des Beleuchtungslichtstrahls, insbesondere eines Fokus des Beleuchtungslichtstrahls, auf oder in dem Objekt erzeugt. Der Fokusbereich des Beleuchtungslichtstrahls kann dabei punkt- oder linienförmig sein. Insgesamt erfolgt die Umlenkung des Beleuchtungslichtstrahls derart, dass ein geschlossener Bereich innerhalb oder auf dem Objekt optisch abgetastet werden kann. Beispielsweise kann der Fokusbereich mäanderförmig über die Probe bewegt werden. Dabei werden regelmäßig die von dem Objekt ausgehenden Detektionsstrahlen, die beispielsweise aufgrund von Reflektionen und/oder Fluoreszenzeffekten in dem Objekt entstehen, von einer Detektoreinheit erfasst.

Außerhalb der Bildaufnahme, insbesondere, wenn kein Objekt zu untersuchen ist, kann eine Leistung des Lasers gemessen und davon abhängig angepasst werden, um ungewollte Schwankungen der Laserleistung zu vermeiden.

Das Dokument US 2002/043622 A1 beschreibt eine Anordnung zum Untersuchen mikroskopischer Präparate mit einem Scanmikroskop. Es wird ein Messwert erfasst, der repräsentativ für die Lichtleistung des auf die Probe treffenden Beleuchtungslichtstrahls ist. Hierzu wird ein Teil des Beleuchtungslichtstrahls ausgekoppelt und an eine Steuereinheit weitergeleitet, die ein Regelsignal ermittelt, wodurch die Lichtleistung des Beleuchtungslichtstrahls einstellbar ist.

Dokument US 2002/041439 A1 beschreibt ein Verfahren und eine Vorrichtung zur Strahlsteuerung in einem Scanmikroskop. Ein interessierender Bereich wird markiert und das Scanfeld wird mittels einer Strahlablenkung zu dem interessierenden Bereich verschoben. Aus diesem interessierenden Bereich wird das Scanbild durch meanderförmiges Abtasten aufgenommen.

Dokument DE 197 02 753 A1 beschreibt ein Laser-Scanning-Mikroskop, bei dem eine Messung der Beleuchtungslichtleistung erfolgt und eine wellenlängenweise Stabilisierung der Intensität und der Laserleistung vorgenommen wird. Hierbei wird die momentane Laserleistung detektiert und hieraus ein Fehlersignal abgeleitet, das on-line dem Laser zur Stabilisierung der Laserleistung zugeführt ist.

Dokument EP 1 780 572 A1 betrifft eine Anordnung zur Erfassung der Beleuchtungsstrahlung in einem Laser-Scanning-Mikroskop. Das Licht mehrerer Laser wird über Lichtleitfasern in das Mikroskop eingekoppelt. Das aus jeder Lichtleitfaser austretende Licht ist linear polarisiert. Abhängig von der Polarisation erfolgt eine Leistungsstabilisierung des Beleuchtungslichtes.

Aufgabe der Erfindung ist es, eine Vorrichtung und ein Verfahren zum Stabilisieren einer Lichtleistung eines Beleuchtungslichtstrahls zu schaffen, die auf besonders einfache Weise eine gleichbleibend stabile Lichtleistung ermöglichen.

Die Aufgabe wird gelöst durch die Merkmale der unabhängigen Ansprüche. Vorteilhafte Ausgestaltungen sind in den Unteransprüchen angegeben.

Die Erfindung zeichnet sich gemäß einem ersten Aspekt dadurch aus, dass ein Messwert, der repräsentativ für die Lichtleistung des auf die Probe treffenden Beleuchtungslichtstrahls ist, erfasst wird, wenn der Beleuchtungslichtstrahl in Richtung eines Blindbereichs abgelenkt wird. Abhängig von dem Messwert wird die Lichtleistung des Beleuchtungslichtstrahls eingestellt. Der Blindbereich ist Teil eines Scanfeldes, das zusätzlich zu dem Blindbereich ein Bildfeld umfasst. Innerhalb des Bildfelds ist ein Probenbereich einer Probe optisch abtastbar ist. Innerhalb des Blindbereichs erfolgt keine optische Abtastung der Probe.

Dies ermöglicht, die Lichtleistung parallel zur Bildaufnahme zu stabilisieren. Insbesondere können Leistungsabweichungen oder Schwankungen vor, während oder nach der Aufnahme einzelner Bilder, insbesondere einzelner Teilbereiche der Bilder beseitigt werden. Der Beleuchtungslichtstrahl kann dabei Licht einer oder mehrerer Wellenlängen umfassen. Dass der Beleuchtungslichtstrahl in Richtung des Blindbereichs abgelenkt wird, umfasst auch, dass der Beleuchtungslichtstrahl vor dem Blindbereich abgeschirmt wird, und bedeutet vielmehr, dass der nicht abgeschirmte Beleuchtungslichtstrahl aufgrund der aktuellen Einstellung eines Scanners des Scanmikroskops im nicht abgeschatteten Zustand auf den Blindbereich gelenkt wird.

Mit Hilfe eines ersten Modulators, dessen Einstellung sich auf die Lichtleistung auswirkt, kann die Lichtleistung gesteuert oder geregelt werden. Der erste Modulator ermöglicht vorzugsweise zusätzlich zu dem Beeinflussen der Lichtleistung, einzelne Laserlinien aus dem Beleuchtungslichtstrahl auszukoppeln, zu unterdrücken und/oder deren Lichtleistung vorzugsweise unabhängig voneinander zu beeinflussen. Im Falle eines akusto-optischen Modulators kann zum Beeinflussen der Lichtleistung ein Kristall des Modulators mit Schwingungen unterschiedlicher Amplitude angeregt werden.

Der Blindbereich umfasst einen Bildvorlauf, einen Bildrücklauf und/oder mehrere Umkehrpunkte, innerhalb der eine Richtungsänderung der Bewegung des Beleuchtungslichtstrahls erfolgt. Der Bildvorlauf bzw. der Bildrücklauf können eine oder mehrere parallele Linien umfassen.

Gemäß der Erfindung kann Beleuchtungslicht unterschiedlicher Wellenlängen bezüglich deren Lichtleistung stabilisiert werden. Insbesondere kann die Lichtleistung, die mit den einzelnen Wellenlängen transportiert wird, unabhängig von dem Licht der anderen Wellenlängen stabilisiert werden. Falls der Beleuchtungslichtstrahl Licht einer ersten und zumindest einer zweiten Wellenlänge umfasst, kann ein erster Messwert erfasst werden, der repräsentativ für eine erste Lichtleistung des Anteils des Beleuchtungslichtstrahls der ersten Wellenlänge ist, wenn der Beleuchtungslichtstrahl in Richtung eines ersten Teilbereichs des Blindbereichs gelenkt wird. Wenn der Beleuchtungslichtstrahl dann in Richtung eines zweiten Teilbereichs des Blindbereichs gelenkt wird kann ein zweiter Messwert erfasst werden, der repräsentativ für eine zweite Lichtleistung des Anteils des Beleuchtungslichtstrahls der zweiten Wellenlänge ist. Abhängig von dem ersten Messwert kann die erste Lichtleistung und abhängig von dem zweiten Messwert die zweite Lichtleistung eingestellt werden. Dabei kann der erste und/oder der zweite Teilbereich je eine oder mehrere Zeilen des Bildvorlaufs oder des Bildrücklaufs und/oder einen oder mehrere Umkehrpunkte umfassen, Dies ermöglicht, vor, während und/oder nach einem auch nur teilweisen Durchlaufen des Bildfeldes die Lichtleistung des Lichts der einzelnen Wellenlängen zu stabilisieren.

Vorzugsweise wird der Beleuchtungslichtstrahl in einen Nutzstrahl und einen Messstrahl aufgeteilt, wobei der Nutzstrahl in Richtung des Scanfeldes gelenkt wird und der Messstrahl zum Erfassen des Messwerts auf einen lichtempfindlichen Detektor gelenkt wird. In diesem Zusammenhang ist es besonders vorteilhaft, wenn der Nutzstrahl und/oder der Messstrahl so polarisiert werden, dass der polarisierte Beleuchtungslichtstrahl, der polarisierte Nutzstrahl bzw. der polarisierte Messstrahl die gleiche Polarisation aufweisen wie der Nutzstrahl unmittelbar vor Auftreffen der Probe. Dies trägt dazu bei, dass die erfasste Lichtleistung proportional zu der auf die Probe treffende Lichtleistung ist, wodurch Polarisationseffekte im Strahlengang des Nutzstrahls beim stabilisieren der Lichtleistung berücksichtigt werden können.

Ein besonders starkes Messsignal am Detektor kann generiert werden, indem während des Erfassens des Messwerts die Lichtleistung erhöht, insbesondere maximiert wird. Dazu kann beispielsweise der erste Modulator so angesteuert werden, dass die durchgelassene Lichtleistung maximal ist. Um eine Beschädigung der Probe zu verhindern, wird der Nutzstrahl dabei so abgelenkt oder abgeschattet, dass die Probe vor dem Nutzstrahl geschützt ist.

Die Erfindung zeichnet sich bezüglich der Vorrichtung durch einen Sensor aus, auf dessen lichtempfindlichen Bereich der Messstrahl gelenkt ist und durch einen Scanner, der den Nutzstrahl in Richtung des Scanfeldes ablenkt. In dem Strahlengang des Beleuchtungslichtstrahls ist ein Polarisationsfilter angeordnet, der den Beleuchtungslichtstrahl so polarisiert, dass der auf den Sensor treffende Messstrahl die gleiche Polarisation hat, wie der auf die Probe treffende Nutzstrahl. Der Polarisationsfilter kann dabei im Strahlengang des Beleuchtungslichtstrahls in Richtung des Beleuchtungslichtstrahls gesehen, vor oder nach dem Strahlteiler angeordnet sein. Zum Auswählen einzelner Wellenlängen und zum Beeinflussen der Lichtleistung des Lichts der einzelnen Wellenlängen ist der erste Modulator im Strahlengang des Beleuchtungslichtstrahls angeordnet. Zusätzlich kann im Strahlengang des Nutzstrahls zwischen Strahlteiler und Scanner ein zweiter Modulator vorgesehen sein.

Ausführungsbeispiele der Erfindung sind im folgenden anhand von schematischen Zeichnungen näher erläutert.

Es zeigen:
- Figur 1: ein Scanmikroskop mit einer ersten Ausfüh- rungsform einer Vorrichtung zum Stabilisieren einer Lichtleistung eines Beleuchtungslicht- strahls,
- Figur 2: das Scanmikroskop mit einer zweiten Ausfüh- rungsform der Vorrichtung zum Stabilisieren der Lichtleistung,
- Figur 3: das Scanmikroskop mit einer dritten Ausfüh- rungsform der Vorrichtung zum Stabilisieren der Lichtleistung,
- Figur 4: ein Scanfeld mit einem Bildbereich und einem Blindbereich,
- Figur 5: ein Ablaufdiagramm eines ersten Programms zum Stabilisieren der Lichtleistung,
- Figur 6: ein Detail-Ausschnitt aus dem Scanfeld gemäß Figur 4,
- Figur 7: ein Ablaufdiagramm eines zweiten Programms zum Stabilisieren der Lichtleistung.

Elemente gleicher Konstruktion oder Funktion sind figrenübeigreifend mit den gleichen Bezugszeichen gekennzeichnet.

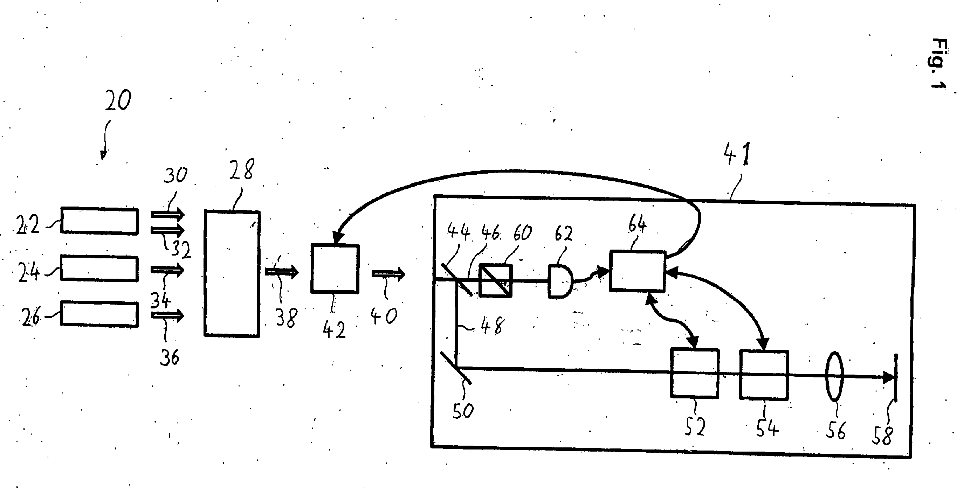

Figur 1 zeigt ein Scanmikroskop 41 und eine Lichtquelle 20. Die Lichtquelle 20 umfasst einen ersten Laser 22, einen zweiten Laser 24 und einen dritten Laser 26. Der erste Laser 22 erzeugt einen ersten Lichtstrahl 30 und einen zweiten Lichtstrahl 32. Der zweite Laser 24 erzeugt einen dritten Lichtstrahl 34 und der dritte Laser 26 erzeugt einen vierten Lichtstrahl 36. Die einzelnen Lichtstrahlen weisen Licht unterschiedlicher Wellenlängen auf. In einem Strahlvereiniger 28 werden die ersten bis vierten Lichtstrahlen 30, 32, 34, 36 zu einem gemeinsamen Lichtstrahl 38 vereinigt. Der gemeinsame Lichtstrahl 38 wird in einen ersten Modulator 42 eingekoppelt Das eingekoppelte Licht verlässt den ersten Modulator 42 in Form eines Beleuchtungslichtstrahls 44, der in das Mikroskop 41 eingekoppelt wird, beispielsweise über eine Lichtleitfaser. In dem Mikroskop 41, das auch einen Scankopf umfasst, wird der Beleuchtungslichtstrahl 40 mit Hilfe eines Strahlteilers 44 in einen Messstrahl 46 und einem Nutzstrahl 48 aufgeteilt. Der Nutzstrahl 48 wird über ein oder mehrere Umlenkelemente 50 auf einen zweiten Modulator 52 und über einen Scanner 54 auf eine abbildende Optik 56 gerichtet, die den Nutzstrahl 48 auf ein Objekt, insbesondere eine Probe 58 lenkt. Der Scanner 54 lenkt das Licht des Nutzstrahls 48 innerhalb eines Scanfeldes auf der Probe 58 ab. Der Messstrahl 46 wird über einen Polarisationsfilter 60 auf einen Sensor 62 gelenkt. Der Sensor 62 ist mit einer Steuerung 64 gekoppelt. Zusätzlich sind der erste und der zweite Modulator 42, 52 sowie der Scanner 54 mit der Steuerung 64 gekoppelt.

Die Laser 22, 24, 26 sind schmalbandige Lichtquellen und erzeugen somit jeweils Licht einzelner, diskreter Wellenlängen. Die Laserlinien können sich vom ultravioletten bis zum infraroten Spektralbereich erstrecken. Als Laserlichtquelle ist beispielsweise auch ein Supercontinuumslaser oder Weißlichtlaser verwendbar. Alternativ dazu können weniger Laser oder mehr Laser vorgesehen sein. Ferner können einer oder mehrere der Laser breitbandiges Licht und somit Licht mit einem kontinuierlich verlaufenden Spektrum an Wellenlängen erzeugen. Alternativ zu den Lasern können auch andere Lichtquellen verwendet werden, beispielsweise eine oder mehrere Quecksilberdampflichtquellen. Der Strahlvereiniger 28 ist vorzugsweise ein akusto-optischer Strahlvereiniger. Alternativ zum dem Strahlvereiniger 28 kann das Licht der Lichtquelle 20 auch direkt in den ersten Modulator 42 eingekoppelt werden. Alternativ zu der Lichtleitfaser zum Einkoppeln des Beleuchtungslichts in das Mikroskop kann die Lichtquelle 20 auch in dem Mikroskop 41 integriert sein.

Der erste Modulator 42 wirkt vorzugsweise spektral selektiv, so dass mit ihm Licht einzelner Wellenlängen ausgewählt werden kann und die Lichtleistung des Lichts der einzelnen Wellenlängen unabhängig voneinander eingestellt werden kann. Insbesondere kann mit dem ersten Modulator 42 genau das Licht ausgewählt werden, dessen Wellenlängen mit den Wellenlängen des erzeugten Lichts übereinstimmt. Der erste Modulator 42 ist vorzugsweise ein akustooptisch arbeitender Modulator, beispielsweise ein AOTF. Akustooptisch arbeitende Modulatoren umfassen zumindest ein transparentes Kristall, in dem eine Schallwelle induziert werden kann, beispielsweise mit Hilfe eines oder mehrerer Piezoaktuatoren. Über die Frequenz der Schallwelle kann Licht einzelner Wellenlängen abgelenkt und dadurch ausgewählt oder aussortiert werden. Über die Leistung der Schallwelle und damit über deren Amplitude kann die Leistung des Lichts der entsprechenden Wellenlänge eingestellt werden. Die Frequenz und die Leistung der Schallwelle können auch als Einstellungen des Modulators bezeichnet werden, Somit ermöglicht der erste Modulator 42 die Lichtleistung des Lichts einzelner Wellenlängen einzustellen.

Der Polarisationsfilter 60 kann alternativ auch im Strahlengang des Beleuchtungslichtstrahls 40 vor dem Strahlteiler 44 und/oder zusätzlich im Strahlengang des Nutzstrahls 48 angeordnet sein. Der Polarisationsfilter 60 ist so ausgebildet, dass der auf den Sensor 62 auftreffende Messstrahl die gleiche Polarisation wie der Nutzstrahl 48 beim Auftreffen auf die Probe 58 hat. Damit ermöglicht der Polarisationsfilter 60, dass die Lichtleistung des Nutzstrahls 48 beim Auftreffen auf die Probe 58 immer proportional zu der Lichtleistung des Messstrahls beim Auftreffen auf den Sensor 62 ist, wodurch eine Polarisation des Nutzstrahls 48 beispielsweise aufgrund des zweiten Modulators 52 und/oder des Scanners 54 sowie der abbildenden Optik 56 berücksichtigt wird.

Der zweite Modulator 52 ist vorzugsweise ein akustooptischer Strahlteiler (AOBS) oder ein Hauptstrahlteilersystem mit einem Moudulator. Der Scanner 54 arbeitet vorzugsweise galvanometrisch oder ist ein MEMS-Scanner. Optional kann der Scanner 54 auch in dem zweiten Modulator 52 integriert sein. Der erste und der zweite Modulator 42, 52 und der Scanner 54 werden mit Hilfe der Steuerung 64 geschaltet und aufeinander abgestimmt, insbesondere synchronisiert. Die Lichtleistung des Messstrahls 46 wird als Messwert mit Hilfe des Sensors 62 erfasst. Ein Messsignal, das beispielsweise viele der Messwerte umfasst, wird dann der Steuerung 64 zur Verfügung gestellt. Die Steuerung 64 steuert dann den ersten Modultor 42 so an, dass dieser Licht unterschiedlicher Wellenlängen mit vorgegebener Leistung passieren lässt. Dabei wird der erste Modulator 42 so eingestellt, dass das passierende Licht der Ordnung null oder Licht erster Ordnung als Beleuchtungslicht verwendet wird.

Der Strahlvereiniger 28 sowie der erste Modulator 42 wirken nicht dispersiv im Gegensatz zu einem Prisma, das bei herkömmlichen Mikroskopen 41 häufig Verwendung fand. Ferner kann gegenüber einem herkömmlichen Mikroskop 41 ein Spektrometer und ein Farbfilter eingespart werden.

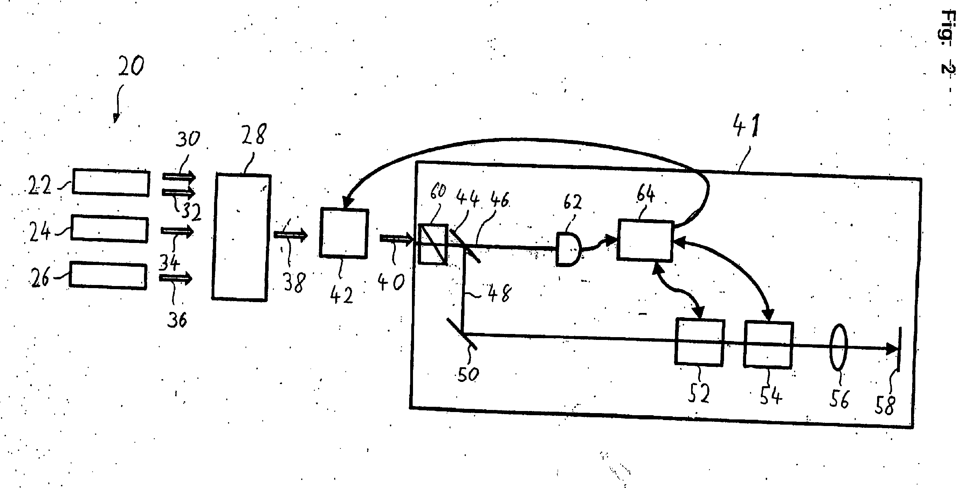

Figur 2 zeigt eine Ausführungsform des Mikroskops 41, die bis auf die Anordnung des Polarisationsfilters 60 dem Mikroskop gemäß Figur 1 entspricht. Insbesondere ist bei dieser Ausführungsform der Polarisationsfilter 60 in Richtung des Beleuchtungslichtstrahls 40 gesehen vor dem Strahlteiler 44 angeordnet. Somit wirkt sich der Polarisationsfilter 60 gleichermaßen auf den Nutzstrahl 48 wie auf den Messstrahl 46 aus. Die Funktion des Polarisationsfilters 60 bleibt jedoch gegenüber der in Figur 1 dargestellten Ausführungsform unverändert.

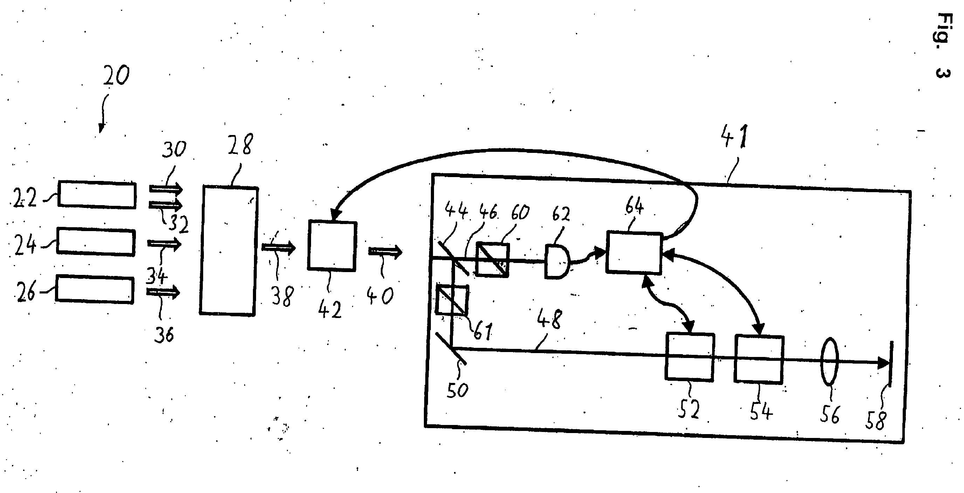

Figur 3 zeigt eine weitere Ausführungsform des Mikroskops 41, die bis auf die Anordnung eines weiteren Polarisationsfilters 61 dem Mikroskop 41 gemäß Figur 1 entspricht. Insbesondere ist der weitere Polarisationsfilter 61 in Richtung des Beleuchtungslichtstrahls 40 gesehen nach dem Strahlteiler 44 im Strahlengang des Nutzstrahls 48 angeordnet. Somit wirkt sich der weitere Polarisationsfilter 61 auf den Nutzstrahl 48 aus. Die Polarisationsfilter 60, 61 sind so aufeinander abgestimmt, dass der auf den Sensor 62 auftreffende Messstrahl 46 die gleiche Polarisation wie der Nutzstrahl 48 beim Auftreffen auf die Probe 58 hat.

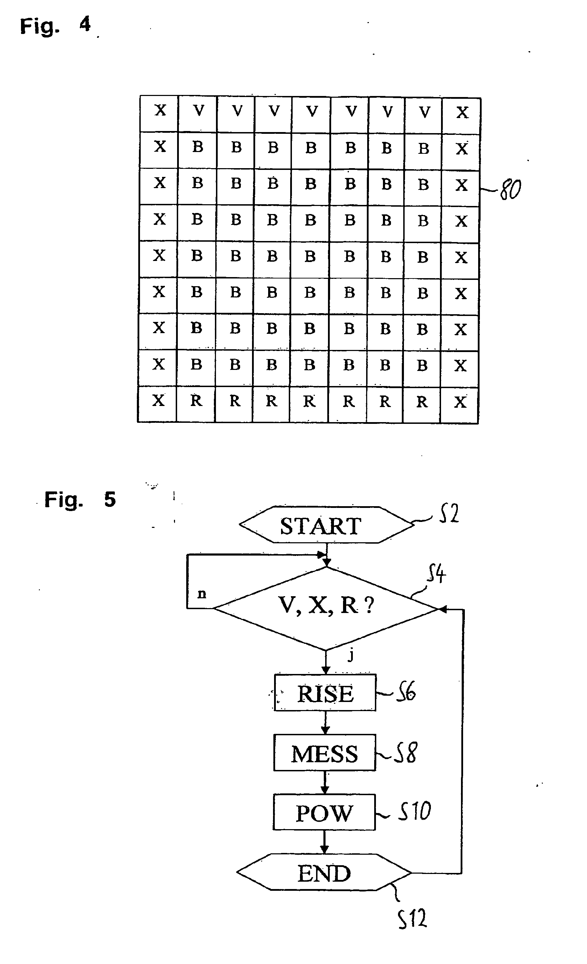

Figur 4 zeigt ein Scanfeld 80, innerhalb dessen mit Hilfe des Scanners 54 ein Fokuspunkt des Nutzstrahls 48 abgelenkt wird. Das Scanfeld 80 umfasst einen Blindbereich und ein Bildfeld B. Innerhalb des Bildfeldes B werden von der Probe ausgehende Detektionsstrahlen, die beispielsweise aufgrund von Reflektionen oder Fluoreszenzeffekten von der Probe 58 abgestrahlt werden, von einem nicht dargestellten Detektor des Mikroskops 41 erfasst. Somit erfolgt in dem Bildfeld B die optische Abtastung und die Bildaufnahme der Probe 58. In dem Blindbereich, der einen Bildvorlauf V, mehrere Umkehrpunkte X und einen Rücklauf R umfasst, erfolgt keine Bildaufnahme. Zur Bildaufnahme kann auch lediglich ein Teilbereich des Bildbereichs B optisch abgetastet werden, insbesondere bei einem ROI-Scan. Regelmäßig wird in x-Richtung schneller gescannt als in y-Richtung, das bedeutet in Figur 4, dass horizontal schneller gescannt wird als vertikal.

Die Leistung des Beleuchtungslichts 40 kann beispielsweise aufgrund von Vibrationen, zum Beispiel beim Einkoppeln des Lichts in die Lichtleitfaser, oder aufgrund eines Verziehens einzelner optischer Elemente der Lichtquelle 20 oder des Mikroskops 41 aufgrund von thermischen Effekten schwanken oder aufgrund von Alterungseffekten von einem vorgegebenen Wert abdriften. Ferner können die Polarisation und die Koppeleffizienz von zuführenden Lichtleitfasern schwanken, was ebenso zu einer Leistungsschwankung führen kann.

Figur 5 zeigt ein Ablaufdiagramm eines Programms zum Betreiben des Mikroskops 41, das vorzugsweise auf einem Speichermedium der Steuereinheit 64 gespeichert ist. Das Programm dient dazu, eine Lichtleistung des Beleuchtungslichtstrahls 40 zu stabilisieren.

Das Programm wird in einem Schritt S2 gestartet, in dem gegebenenfalls Variablen initialisiert werden.

In eine Schritt S4 wird ausgelöst durch eine erste Anweisung überprüft, ob der Beleuchtungslichtstrahl 40, insbesondere der Nutzstrahl 48 auf den Blindbereich, insbesondere den Bildvorlauf V, den Bildrücklauf R oder einen der Umkehrpunkte X gerichtet ist. Ist die Bedingung des Schritts S4 erfüllt, so wird die Bearbeitung in einem Schritt S6 fortgesetzt. Ist die Bedingung des Schritts S4 nicht erfüllt, so wird der Schritt S4 erneut abgearbeitet.

In dem Schritt S6 wird die Lichtleistung des Beleuchtungslichtstrahls 40 ausgelöst durch eine zweite Anweisung RISE erhöht, die bewirkt, dass der erste Modulator 42 die maximale Lichtleistung des Beleuchtungslichtstrahls 40 durchlässt. Bei dem akusto-optischen Modulator kann dazu eine Leistung POW der anregenden Schallwelle so gewählt werden, dass die Lichtleistung maximal wird. Dazu kann eine Übertragungsfunktion des ersten Modulators 42 auf dem Speichermedium abgespeichert sein und von der Steuereinheit 64 berücksichtigt werden. Vorzugsweise wird in dem Schritt S6 zusätzlich der Nutzstrahl 48 abgeschattet, beispielsweise mit Hilfe des zweiten Modulators 52. Das Licht des Nutzstrahls 48 kann auch über einen modulierbaren Shutter, also ein Element zur teilweisen vollständigen Abschirmung des Nutzstrahls 48 vorgenommen werden.

In einem Schritt S8 wird der Messwert MESS erfasst. Der Messwert MESS ist repräsentativ für die Lichtleistung des Nutzstrahls 48 beim Auftreffen auf die Probe 58.

In einem Schritt S10 wird die Leistung POW der anregenden Schallwelle in dem ersten Modulator 42 so eingestellt, dass sich der Messwert MESS an einen vorgegebenen Sollwert annähert.

In einem Schritt S12 kann das erste Programm beendet werden. Vorzugsweise wird das erste Programm jedoch in dem Schritt S4 erneut abgearbeitet. Bei jedem erneuten Abarbeiten, kann dann die Lichtleistung von Licht einer anderen Wellenlänge stabilisiert werden.

Das Programm kann nun fortlaufend während der Bildaufnahme abgearbeitet werden. Dabei können in unterschiedlichen Teilbereichen des Blindbereichs unterschiedliche Laserlinien stabilisiert werden. Beispielsweise kann nacheinander die Lichtleistung der ersten bis vierten Lichtstrahlen 30, 32, 34, 36 stabilisiert werden. Falls beispielsweise der Bildvorlauf V vier Linien umfasst, kann die Lichtleistung aller dargestellten Laserlinien noch vor der Bildaufnahme stabilisiert werden. Alternativ oder zusätzlich können die einzelnen Laserlinien jeweils in den Umkehrpunkten stabilisiert werden. Somit kann während der Bildaufnahme eine gleichbleibende Lichtleistung der einzelnen Laserlinien gewährleistet werden. Dies trägt zu einer besonders hohen Qualität der Bildaufnahme bei.

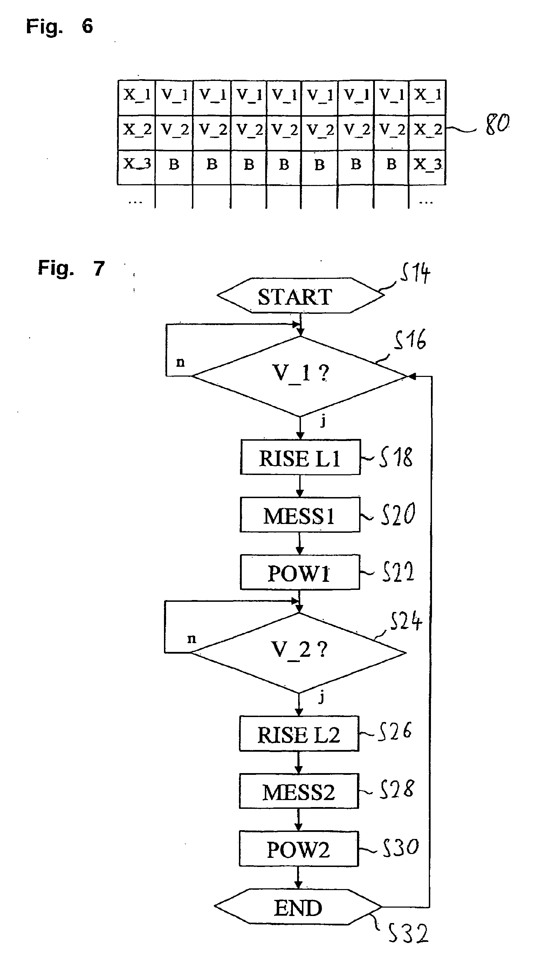

Figur 6 zeigt eine Detail-Aufnahme des Scanfeldes 80. Das Scanfeld 80 weist eine erste Bildvorlauflinie V_1und zumindest eine zweite Bildvorlauflinie V_2 auf. Ferner weist das Scanfeld 80 mehrere Umkehrpunkte X_1 bis X_3 auf.

Figur 7 zeigt ein Ablaufdiagramm eines zweiten Programms zum Stabilisieren der Lichtleistung des Beleuchtungslichtstrahls 40. Das zweite Programm ist auf dem Speichermedium der Steuereinheit 64 gespeichert und dient dazu die Lichtleistung von Licht einer ersten Wellenlänge L1 und einer zweiten Wellenlänge L2 zu stabilisieren. Beispielsweise weisen der erste Lichtstrahl 30 das Licht der ersten Wellenlänge L1 und der zweite Lichtstrahl 32 das Licht der zweiten Wellenlänge L2 auf.

In einem Schritt S 14 wird das zweite Programm gestartet.

In eine Schritt S16 wird ausgelöst durch die erste Anweisung überprüft, ob der Beleuchtungslichtstrahl 40, insbesondere der Nutzstrahl 48 auf die erste Bildvorlauflinie V_1 gerichtet ist. Ist die Bedingung des Schritts S 16 erfüllt, so wird die Bearbeitung in einem Schritt S18 fortgesetzt, Ist die Bedingung des Schritts S 16 nicht erfüllt, so wird der Schritt S 16 erneut abgearbeitet.

In dem Schritt S 18 wird die Lichtleistung des Beleuchtungslichtstrahls 40 ausgelöst durch die zweite Anweisung RISE erhöht, die bewirkt, dass der erste Modulator 42 die maximale Lichtleistung des Lichts der ersten Wellenlänge L durchlässt. Vorzugsweise wird in dem Schritt S18 zusätzlich der Nutzstrahl 48 abgeschattet, beispielsweise mit Hilfe des zweiten Modulators 52.

In einem Schritt S20 wird ein erster Messwert MESS 1 erfasst. Der erste Messwert MESSI ist repräsentativ für die Lichtleistung des Lichts der ersten Wellenlänge L1 beim Auftreffen auf die Probe 58.

In einem Schritt S22 wird die Leistung POW der anregenden Schallwelle in dem ersten Modulator 42 so eingestellt, dass sich der erste Messwert MESS1 an einen vorgegebenen ersten Sollwert annähert.

In eine Schritt S24 wird ausgelöst durch die erste Anweisung überprüft, ob der Beleuchtungslichtstrahl 40, insbesondere der Nutzstrahl 48 auf die zweite Bildvorlauflinie V_2 gerichtet ist. Ist die Bedingung des Schritts S24 erfüllt, so wird die Bearbeitung in einem Schritt S26 fortgesetzt. Ist die Bedingung des Schritts S24 nicht erfüllt, so wird der Schritt S24 erneut abgearbeitet.

In dem Schritt S26 wird die Lichtleistung des Lichts der zweiten Wellenlänge L2 ausgelöst durch die zweite Anweisung RISE erhöht, die bewirkt, dass der erste Modulator 42 die maximale Lichtleistung des Lichts der zweiten Wellenlänge L2 durchlässt. Vorzugsweise wird in dem Schritt S6 zusätzlich der Nutzstrahl 48 abgeschattet, beispielsweise mit Hilfe des zweiten Modulators 52.

In einem Schritt S28 wird ein zweiter Messwert MESS2 erfasst. Der zweite Messwert MESS2 ist repräsentativ für die Lichtleistung des Lichts der zweiten Wellenlänge L2 beim Auftreffen auf die Probe 58.

In einem Schritt S30 wird die Leistung POW der anregenden Schallwelle in dem ersten Modulator 42 so eingestellt, dass sich der zweite Messwert MESS2 an einen vorgegebenen zweiten Sollwert annähert.

In einem Schritt S32 kann das zweite Programm beendet werden. Vorzugsweise wird das zweite Programm für Licht aller verwendeter Wellenlängen abgearbeitet. Dabei können die Messungen auch in den Umkehrpunkten X und/oder den einzelnen Linien des Bildrücklaufs R vorgenommen werden. Alternativ kann die Messung einer Laserlinie auch über mehrere Zeilen des Bildvorlaufs V oder des Bildrücklauf R oder über mehrere Umkehrpunkte hinweg vorgenommen werden.

Die beiden Algorithmen zur Stabilisierung der Lichtleistung sind eng in die Scanlogic des Scan-Mikroskops eingewoben. Die Steuerung 64 berechnet mit Hilfe der Charakteristik des ersten Modulators 42 die einzustellende Lichtleistung,. Dies erfolgt sowohl im offenen als auch im geschlossenen Kreislaufund somit durch Steuerung bzw Regelung des ersten Modulators 42.

Vorzugsweise werden zu vorgegebenen Zeiten Referenzmessungen durchgeführt. Dabei werden sämtliche verfügbare Lichtquellen mit deren einzelnen Wellenlängen gemessen. Die Aufnahme kann beispielsweise am Tagesbeginn, zu jedem Systemstart oder nach einer fest vorgegebenen Zeitdauer durchgeführt werden. Alle folgenden Messungen beziehen sich dann auf die zuletzt vorgenommene Referenzmessung. Dadurch können mehr Laserlinien gemessen und stabilisiert werden, als Messkanäle vorhanden sind, Zudem kann auch bei unabhängig aufeinanderfolgenden Messungen dieselbe Leistung reproduziert werden. Ebenso führt dies zu einer geringeren Regelreserve, insbesondere zu einer höheren verfügbaren gesteuerten Laserleistung, da damit Leistungsdrifts, über Zeiträume von Wochen bis Jahren, wie z.B. Alterungseffekte nicht vorgehalten werden müssen.

### Bezugszeichenliste:

- 20: Lichtquelle
- 22: erster Laser
- 24: zweiter Laser
- 26: dritter Laser
- 30: erster Lichtstrahl
- 32: zweiter Lichtstrahl
- 34: dritter Lichtstrahl
- 36: vierter Lichtstrahl
- 28: Strahlvereiniger
- 38: gemeinsamer Lichtstrahl
- 42: erster Modulator
- 40: Beleuchtungslichtstrahl
- 41: Mikroskop
- 44: Strahlteiler
- 46: Messstrahl
- 48: Nutzstrahl
- 50: Umlenkelement
- 52: zweiter Modulator
- 54: Scanner
- 56: abbildende Optik
- 58: Probe
- 60: Polarisationsfilter
- 61: weiterer Polarisationsfilter
- 62: Sensor
- 64: Steuereinheit
- 80: Scanfeld
- START: Programmstart
- V_1: erste Bildvorlauflinie
- V_2: zweite Bildvorlauflinie
- V: Bildvorlauf
- X, X_1 ...: Umkehrpunkte
- R: Bildrücklauf
- B: Bildfeld
- RISE: zweite Anweisung
- L1: erste Wellenlänge
- L2: zweite Wellenlänge
- MESS: Messwert
- MESS 1: erster Messwert
- MESS2: zweiter Messwert
- POW: Leistung Schallwelle
- POW1: Leistung erste Schallwelle
- POW2: Leistung zweite Schallwelle
- END: Programmende
- S2 bis S32: Schritte zwei bis zweiundreißig

## Patentansprüche

1. Verfahren zum Stabilisieren einer Lichtleistung eines Beleuchtungslichtstrahls (40) für ein Scan-Mikroskop (41),
bei dem der Beleuchtungslichtstrahl (40) innerhalb eines Scanfeldes (80) abgelenkt wird, das zumindest ein Bildfeld (B), in dem ein Probenbereich einer Probe (58) optisch abtastbar ist, und das zumindest einen Blindbereich (X, V, R) umfasst, in dem keine optische Abtastung der Probe (58) erfolgt, und
bei dem, wenn der Beleuchtungslichtstrahl (40) in Richtung des Blindbereichs (X, V, R) abgelenkt wird, ein Messwert (MESS) erfasst wird, der repräsentativ für die Lichtleistung des auf die Probe (58) treffenden Beleuchtungslichtstrahls (40) ist, und
bei dem abhängig von dem Messwert (MESS) die Lichtleistung des Beleuchtungslichtstrahls (40) eingestellt wird, wobei der Nutzstrahl (48) während des Erfassens des Messwerts (MESS) so abgelenkt oder abgeschattet wird, dass die Probe (58) vor dem Nutzstrahl (48) geschützt ist, und
der Beleuchtungslichtstrahl (40) Licht einer ersten und zumindest einer zweiten Wellenlänge (L1, L2) umfasst und, wenn der Beleuchtungslichtstrahl (40) in Richtung eines ersten Teilbereichs des Blindbereichs (X, V, R) gelenkt wird, ein erster Messwert (MESS1) erfasst wird, der repräsentativ für eine erste Lichtleistung des Anteils des Beleuchtungslichtstrahls (40) der ersten Wellenlänge (LAM1) ist, und wenn der Beleuchtungslichtstrahl (40) in Richtung eines zweiten Teilbereichs des Blindbereichs (X, V, R) gelenkt wird, ein zweiter Messwert (MESS2) erfasst wird, der repräsentativ für eine zweite Lichtleistung des Anteils des Beleuchtungslichtstrahls (40) der zweiten Wellenlänge (32) ist, wobei abhängig von dem ersten Messwert (MESS1) die erste Lichtleistung und unabhängig von dem zweiten Messwert (MESS2) die zweite Lichtleistung eingestellt wird.

2. Verfahren nach Anspruch 1, bei dem zum Einstellen der Lichtleistung abhängig von dem Messwert (MESS) ein erster Modulator (42) angesteuert wird, dessen Einstellung sich auf die Lichtleistung auswirkt.

3. Verfahren nach Anspruch 1, bei dem anhand mehrerer zeitlich nacheinander erfasster Messwerte (MESS) die Lichtleistung mittels eines ersten Modulators (42), dessen Einstellung sich auf die Lichtleistung auswirkt, auf einen vorgegebenen Sollwert der Lichtleistung geregelt wird.

4. Verfahren nach einem der vorstehenden Ansprüche, bei dem der Blindbereich (X, V, R) zumindest einen Bildvorlauf (V), zumindest einen Bildrücklauf (R), und/oder mehrere Umkehrpunkte (X) umfasst, innerhalb der eine Richtungsänderung der Bewegung des Beleuchtungslichtstrahls (40) erfolgt.

5. Verfahren nach einem der vorstehenden Ansprüche 1 bis 4, bei dem der erste und/oder der zweite Teilbereich je eine oder mehrere Zeilen (V_1, V_2) des Bildvorlaufs (V) und/oder des Bildrücklaufs (R), und/oder einen oder mehrere Umkehrpunkte (X_1, X_2) umfassen.

6. Verfahren nach einem der vorstehenden Ansprüche, bei dem der Beleuchtungslichtstrahl (40) in einen Nutzstrahl (48) und einen Messstrahl (46) aufgeteilt wird und bei dem der Nutzstrahl (48) in Richtung des Scanfelds (80) gelenkt wird und bei dem der Messstrahl (46) zum Erfassen des Messwerts (MESS) auf einen lichtempfindlichen Detektor (62) gelenkt wird.

7. Verfahren nach Ansprüch 6, bei dem der Beleuchtungslichtstrahl (40), der Nutzstrahl (48) und/oder der Messstrahl (46) so polarisiert werden, dass der polarisierte Beleuchtungslichtstrahl (40), der polarisierte Nutzstrahl (48) bzw. der polarisierte Messstrahl (46) die gleiche Polarisation aufweisen wie der Nutzstrahl (48) unmittelbar vor dem Auftreffen auf die Probe (58).

8. Vorrichtung zur Stabilisierung einer Lichtleistung eines Beleuchtungslichtstrahls (40) nach Art eines Scan-Mikroskops, bei dem der Beleuchtungslichtstrahl (40) innerhalb eines Scanfeldes (80) abgelenkt wird, das zumindest ein Bildfeld (B), in dem ein Probenbereich einer Probe (58) optisch abtastbar ist, und das zumindest einen Blindbereich (X,V,R) umfasst, in dem keine Abtastung der Probe erfolgt, und mit einem Strahlteiler (44), der einen Beleuchtungslichtstrahl (40) in einen Messstrahl (46) und einen Nutzstrahl (48) aufteilt,
einen Sensor (62), auf dessen lichtempfindlichen Bereich der Messstrahl (46) gelenkt ist, zum Erfassen eines Messwerts (MESS), der repräsentativ für die Leistung des Nutzstrahls (48) beim Auftreffen auf die Probe (58) ist,
mit einem Scanner (54), der den Nutzstrahl (48) in Richtung eines Scanfelds (80) ablenkt,
und bei der im Strahlengang des Beleuchtungslichtstrahls (40) ein Polarisationsfilter (60) angeordnet ist, der den Beleuchtungslichtstrahl (40) so polarisiert, dass der auf den Sensor (62) treffende Messstrahl (46) die gleiche Polarisation hat wie der auf die Probe treffende Nutzstrahl (48), wobei der Scanner (54) den Nutzstrahl (48) während des Erfassens des Messwerts (MESS) so ablenkt, dass die Probe (58) vor dem Netzstrahl (48) geschützt ist, und wobei
der Beleuchtungslichtstrahl (40) Licht einer ersten und zumindest einer zweiten Wellenlänge (L1, L2) umfasst und, wenn der Beleuchtungslichtstrahl (40) in Richtung eines ersten Teilbereichs des Blindbereichs (X, V, R) gelenkt wird, ein erster Messwert (MESS1) erfasst wird, der repräsentativ für eine erste Lichtleistung des Anteils des Beleuchtungslichtstrahls (40) der ersten Wellenlänge (LAM1) ist, und wenn der Beleuchtungslichtstrahl (40) in Richtung eines zweiten Teilbereichs des Blindbereichs (X, V, R) gelenkt wird, ein zweiter Messwert (MESS2) erfasst wird, der repräsentativ für eine zweite Lichtleistung des Anteils des Beleuchtungslichtstrahls (40) der zweiten Wellenlänge (32) ist, wobei abhängig von dem ersten Messwert (MESS1) die erste Lichtleistung und unabhängig von dem zweiten Messwert (MESS2) die zweite Lichtleistung eingestellt wird.

9. Vorrichtung nach Anspruch 8, bei der der Polarisationsfilter (60) im Strahlengang des Beleuchtungslichtstrahls (40) in Richtung des Beleuchtungslichtstrahls (40) gesehen vor dem Strahlteiler (44) angeordnet ist.

10. Vorrichtung nach Anspruch 8, bei der der Polarisationsfilter (60) im Strahlengang des Beleuchtungslichtstrahls (40) in Richtung des Beleuchtungslichtstrahls (40) gesehen nach dem Strahlteiler (44) angeordnet ist.

11. Vorrichtung nach einem der Ansprüche 8 bis 10, bei der im Strahlengang des Beleuchtungslichtstrahls (40) vor dem Strahlteiler (44) ein erster Modulator (42) angeordnet ist, dessen Einstellung sich auf die Lichtleistung des Beleuchtungslichtstrahls (40) auswirkt.

12. Vorrichtung nach einem der Ansprüche 8 bis 11, bei der ein zweiter Modulator (52) im Strahlengang des Nutzstrahls (48) zwischen Strahlteiler (44) und Scanner (54) angeordnet ist.

13. Mikroskop nach Art eines Konfokalmikroskops, eines Scanmikroskops und/oder eines Fluoreszenzmikroskops, das die Vorrichtung nach einem der Ansprüche 8 bis 12 umfasst.

## Claims

1. Method for stabilizing a light output of an illumination light beam (40) for a scan microscope (41),
wherein the illumination light beam (40) within a scan field (80) is deflected that comprises at least an image field (B) in which a sample area of a sample (58) can be optically scanned and at least a blind area (X, V, R) in which there is no optical scanning of the sample (58), and
wherein, when the illumination light beam (40) is deflected in direction of the blind area (X, V, R), a measured value (MESS) is detected that is representative for the light output of the illumination light beam (40) impinging on the sample (58), and
wherein dependent on the measured value (MESS) the light output of the illumination light beam (40) is set, wherein during detection of the measured value (MESS) the useful beam (48) is deflected or shadowed such that the sample (58) is protected from the useful beam (48) and the illumination light beam (40) comprises light of a first and at least of a second wavelength (L1, L2) and, when the illumination light beam (40) is directed in direction of a first subrange of the blind area (X, V, R), a first measured value (MESS 1) is detected that is representative for a first light output of the portion of the illumination light beam (40) of the first wavelength (LAM1), and when the illumination light beam (40) is directed in direction of a second subrange of the blind area (X, V, R) a second measured value (MESS2) is detected that is representative for a second light output of the portion of the illumination light beam (40) of the second light output of the portion of the illumination light beam (40) of the second wavelength (32), wherein dependent on the first measured value (MESS1) the first light output and independent of the second measured value (MESS2) the second light output is set.

2. Method according to claim 1, wherein for setting the light output dependent on the measured value (MESS) a first modulator (42) is controlled, the setting of which has an effect on the light output.

3. Method according to claim 1, wherein by means of several measured values (MESS) detected successively the light output is set by means of a first modulator (42), the setting of which has an effect on the light output, to a given set value.

4. Method according to one of the preceding claims, wherein the blind area (X, V, R) comprises at least one image forward flow (V), at least one image backward flow (R) and/or several reversal points (X), within which there is a change of direction of the motion of the illumination light beam (40).

5. Method according to one of the preceding claims 1 to 4, wherein the first and/or the second subrange each comprises one or several lines (V_1, V_2) of the image forward flow (V) and/or of the image backward flow (R), and/or one or several reversal points (X_1, X_2).

6. Method according to one of the preceding claims, wherein the illumination light beam (40) is split into a useful beam (48) and a measured beam (46) and wherein the useful beam (48) is directed in direction of the scan field (80) and wherein the measurement beam (46) for detecting the measured value (MESS) is directed onto a light-sensitive detector (62).

7. Method according to claim 6, wherein the illumination light beam (40), the useful beam (48) and/or the measured beam (46) are polarized such that the polarized illumination light beam (40), the polarized useful beam (48) or respectively the polarized measured beam (46) have the same polarization as the useful beam (48) immediately before impinging on the sample (58).

8. Method for stabilization of a light output of an illumination light beam (40) in the manner of a scan microscope,
wherein the illumination light beam (40) within a scan field (80) is deflected, that comprises at least an image field (B) in which a sample area of a sample (58) can be scanned optically and that at least comprises a blind area (X, V, R) where no scanning of the sample (58) takes place, and
comprising a beam splitter (44) that splits an illumination light beam (40) into a measured beam (46) and into a useful beam (48),
a sensor (62) on the light-sensitive area of which the light beam (46) is directed for detecting a measured value (MESS) that is representative for the output of the useful beam (48) when impinging on the sample (58),
comprising a scanner (54) that deflects the useful beam (48) in direction of a scan field (80),
and wherein in the beam path of the illumination light beam (40) a polarization filter (60) is arranged polarizing the illumination light beam (40) such that the measured beam (46) impinging on the sensor (62) has the same polarization as the useful beam (48) impinging on the sample, wherein the scanner (54) during detection of the measured value (MESS) deflects the useful beam (48) such that the sample (58) is protected from the useful beam (48), and wherein
the illumination light beam (40) comprises light of a first and at least of a second wavelength (L1, L2) and, when the illumination light beam (40) is directed in direction of a first subrange of the blind area (X, V, R), a first measured value (MESS 1) is detected that is representative for a first light output of the portion of the illumination light beam (40) of the first wavelength (LAM1), and when the illumination light beam (40) is directed in direction of a second subrange of the blind area (X, V, R) a second measured value (MESS2) is detected that is representative for a second light output of the portion of the illumination light beam (40) of the second light output of the portion of the illumination light beam (40) of the second wavelength (32), wherein dependent on the first measured value (MESS1) the first light output and independent of the second measured value (MESS2) the second light output is set.

9. Device according to claim 8, wherein the polarization filter (60) in the beam path of the illumination light beam (40) is arranged in direction of the illumination light beam (40) viewed in front of the beam splitter (44).

10. Device according to claim 8, wherein the polarization filter (60) in the beam path of the illumination light beam (40) is arranged in direction of the illumination light beam (40) viewed after the beam splitter (44).

11. Device according to one of claims 8 to 10, wherein in the beam path of the illumination light beam (40) in front of the beam splitter (44) a first modulator (42) is arranged the setting of which has an effect on the light output of the illumination light beam (40).

12. Device according to one of claims 8 to 11, wherein a second modulator (52) is arranged in the beam path of the useful beam (48) between beam splitter (44) and scanner (54).

13. Microscope in the manner of a confocal microscope, a scan microscope and/or a fluorescence microscope comprising the device according to claims 8 to 12.

## Revendications

1. Procédé de stabilisation d'une puissance d'éclairage d'un rayon de lumière d'éclairage (40) pour un microscope à balayage (41),
dans lequel le rayon de lumière d'éclairage (40) est dévié à l'intérieur d'un champ de balayage (80) qui comprend au moins un champ d'image (B) dans lequel une zone d'échantillonnage d'un échantillon (58) peut être analysée optiquement et au moins une zone aveugle (X, V, R) dans laquelle aucune analyse optique de l'échantillon (58) n'est réalisée, et
dans lequel, lorsque le rayon de lumière d'éclairage (40) est dévié dans la direction de la zone aveugle (X, V, R), une valeur de mesure (MESS) est déterminée, qui est représentative de la puissance d'éclairage du rayon de lumière d'éclairage (40) rencontrant l'échantillon (58), et dans lequel, en fonction de la valeur de mesure (MESS), la puissance d'éclairage d'un rayon de lumière d'éclairage (40) est réglée, le rayon utile (48) étant dévié ou dégradé pendant la détermination de la valeur de mesure (MESS) de telle sorte que l'échantillon (58) avant le rayon utile (48) est protégé,
et le rayon de lumière d'éclairage (40) comprend de la lumière d'une première et d'au moins une deuxième longueur d'onde (L1, 2), et lorsque le rayon de lumière d'éclairage (40) est dévié dans la direction d'une première zone partielle de la zone aveugle (X, V, R), une première valeur de mesure (MESS1) est déterminée, qui est représentative d'une première puissance d'éclairage de la part du rayon de lumière d'éclairage (40) de la première longueur d'onde (LAM1), et lorsque le rayon de lumière d'éclairage (40) est dévié dans la direction d'une deuxième zone partielle de la zone aveugle (X, V, R), une deuxième valeur de mesure (MESS2) est déterminée, qui est représentative d'une deuxième puissance d'éclairage de la part du rayon de lumière d'éclairage (40) de la deuxième longueur d'onde (32), étant entendu que la première puissance d'éclairage est réglée en fonction de la première valeur de mesure (MESS1) et la deuxième puissance d'éclairage indépendamment de la deuxième valeur de mesure (MESS2).

2. Procédé selon la revendication 1, dans lequel aux fins du réglage de la puissance d'éclairage en fonction de la valeur de mesure (MESS), un premier modulateur (42) est commandé, dont le réglage influence la puissance d'éclairage.

3. Procédé selon la revendication 1, dans lequel la puissance d'éclairage est réglée à une valeur de consigne prédéterminée de la puissance d'éclairage, sur la base de plusieurs valeurs de mesure (MESS) déterminées successivement, au moyen d'un premier modulateur (42), dont le réglage influence la puissance d'éclairage.

4. Procédé selon l'une des revendications précédentes, dans lequel la zone aveugle (X, V, R) comprend au moins une avance d'image (V), au moins un retour d'image (R) et/ou plusieurs points d'inversion (X) à l'intérieur desquels un changement de direction du rayon de lumière d'éclairage (40) a lieu.

5. Procédé selon l'une des revendications 1 à 4 précédentes, dans lequel la première et/ou la deuxième zones partielles comprennent respectivement une ou plusieurs lignes (V_1, V_2) de l'avance d'image (V) et/ou du retour d'image (R) et/ou un ou plusieurs points d'inversion (X_1, X_2).

6. Procédé selon l'une des revendications précédentes, dans lequel le rayon de lumière d'éclairage (40) est séparé en un rayon utile (48) et un rayon de mesure (46), dans lequel le rayon utile (48) est dévié dans la direction du champ de balayage (80) et dans lequel le rayon de mesure (46) est dévié vers un détecteur photosensible (62) aux fins de la détermination de la valeur de mesure (MESS).

7. Procédé selon la revendication 6, dans lequel le rayon de lumière d'éclairage (40), le rayon utile (48) et/ou le rayon de mesure (46) sont polarisés de telle sorte que le rayon de lumière d'éclairage polarisé (40), le rayon utile polarisé (48) et/ou le rayon de mesure polarisé (46) présentent la même polarisation que le rayon utile (48) immédiatement avant de rencontrer l'échantillon (58).

8. Dispositif de stabilisation d'une puissance d'éclairage d'un rayon de lumière d'éclairage (40) à la manière d'un microscope à balayage,
dans lequel le rayon de lumière d'éclairage (40) est dévié à l'intérieur d'un champ de balayage (80) qui comprend au moins un champ d'image (B) dans lequel une zone d'échantillonnage d'un échantillon (58) peut être analysée optiquement et au moins une zone aveugle (X, V, R) dans laquelle aucune analyse optique de l'échantillon (58) n'est réalisée, et
comprenant un séparateur de faisceau (44) qui sépare un rayon de lumière d'éclairage (40) en un rayon de mesure (46) et un rayon utile (48),
un capteur (62) vers la zone photosensible duquel le rayon de mesure (46) est dévié aux fins de la détermination d'une valeur de mesure (MESS) qui est représentative de la puissance du rayon utile (48) lorsqu'il rencontre l'échantillon (58),
comprenant un scanner (54) qui dévie le rayon utile (48) dans la direction d'un champ de balayage (80),
et dans lequel un filtre de polarisation (60) est agencé dans le trajet du rayon de lumière d'éclairage (40), lequel polarise le rayon de lumière d'éclairage (40) de telle sorte que le rayon de mesure (46) rencontrant le capteur (62) présente la même polarisation que le rayon utile (48) rencontrant l'échantillon, étant entendu que le scanner (54) dévie le rayon utile (48) pendant la détermination de la valeur de mesure (MESS) de telle sorte que l'échantillon (58) est protégé avant le rayon utile (48),
et dans lequel le rayon de lumière d'éclairage (40) comprend de la lumière d'une première et d'au moins une deuxième longueur d'onde (L1, 2), et lorsque le rayon de lumière d'éclairage (40) est dévié dans la direction d'une première zone partielle de la zone aveugle (X, V, R), une première valeur de mesure (MESS1) est déterminée, qui est représentative d'une première puissance d'éclairage de la part du rayon de lumière d'éclairage (40) de la première longueur d'onde (LAM1), et lorsque le rayon de lumière d'éclairage (40) est dévié dans la direction d'une deuxième zone partielle de la zone aveugle (X, V, R), une deuxième valeur de mesure (MESS2) est déterminée, qui est représentative d'une deuxième puissance d'éclairage de la part du rayon de lumière d'éclairage (40) de la deuxième longueur d'onde (32), étant entendu que la première puissance d'éclairage est réglée en fonction de la première valeur de mesure (MESS1) et la deuxième puissance d'éclairage indépendamment de la deuxième valeur de mesure (MESS2).

9. Dispositif selon la revendication 8, dans lequel le filtre de polarisation (60) est agencé dans le trajet du rayon de lumière d'éclairage (40), considéré dans la direction du rayon de lumière d'éclairage (40), avant le séparateur de faisceau (44).

10. Dispositif selon la revendication 8, dans lequel le filtre de polarisation (60) est agencé dans le trajet du rayon de lumière d'éclairage (40), considéré dans la direction du rayon de lumière d'éclairage (40), après le séparateur de faisceau (44).

11. Dispositif selon l'une des revendications 8 à 10, dans lequel un premier modulateur (42) est agencé dans le trajet du rayon de lumière d'éclairage (40), avant le séparateur de faisceau (44), dont le réglage influence la puissance d'éclairage du rayon de lumière d'éclairage (40).

12. Dispositif selon l'une des revendications 8 à 11, dans lequel un deuxième modulateur (52) est agencé dans le trajet du rayon utile (48) entre le séparateur de faisceau (44) et le scanner (54).

13. Microscope à la manière d'un microscope homofocal, d'un microscope à balayage et/ou d'un microscope à fluorescence, qui comprend le dispositif selon l'une des revendications 8 à 12.
